Europäisches Patentamt

European Patent Office

Office européen des brevets

Numéro de publication: **0 368 708**

**A1**

## DEMANDE DE BREVET EUROPEEN

Numéro de dépôt: 89402886.9

Date de dépôt: 19.10.89

Int. Cl.5 **B67D 5/02, B67D 1/08, F16L 29/00**

Priorité: 21.10.88 FR 8813806

Date de publication de la demande:
16.05.90 Bulletin 90/20

Etats contractants désignés:
**AT BE CH DE ES FR GB GR IT LI LU NL SE**

Demandeur: **COMPAGNIE GERVAIS-DANONE**
**126-130 rue Jules Guesde**
**F-92302 Levallois Perret(FR)**

Inventeur: **Deutsch, Dorothea**
**29, rue Fessart**
**F-92100 Boulogne(FR)**

Mandataire: **Orès, Bernard et al**
**Cabinet ORES 6, Avenue de Messine**
**F-75008 Paris(FR)**

Procédé et dispositif de transfert aseptique du contenu d'un recipient dans un tank.

Procédé et installation pour le transfert du contenu d'un récipient à ouverture fermée par un bouchon dans un tank comportant une ouverture de dimension conjuguée de celle du récipient et fermée par un obturateur amovible, où après avoir amené les deux ouvertures en regard l'une de l'autre on réunit par une jonction étanche les faces externes du bouchon et de l'obturateur, puis on écarte l'ensemble formé par le bouchon et l'obturateur des deux dites ouvertures.

On dissocie l'étape de réunion à jonction étanche du bouchon (62) et de l'obturateur (53) de celle de solidarisation du récipient sur le tank et on provoque le déplacement de l'ensemble du bouchon et de l'obturateur par actionnement d'un organe solidaire dudit obturateur (53) commandé de l'extérieur du tank (10).

FIG.8

# PROCEDE ET DISPOSITIF DE TRANSFERT ASEPTIQUE DU CONTENU D'UN RECIPIENT DANS UN TANK

L'invention a pour objet un procédé et un dispositif de transfert aseptique du contenu d'un récipient dans un tank.

Elle trouve plus particulièrement application, mais sans que cette indication ait quelque caractère limitatif que ce soit, dans l'industrie alimentaire, notamment celle de la fabrication de produits laitiers frais comme des yaourts ou analogues qui fait appel à une étape de maturation du lait dans une cuve ou tank de traitement.

Dans des procédés industriels de ce type, notamment ceux relatifs à la production de yaourts, il convient d'ensemencer le lait contenu dans le tank à l'aide de ferments qui, généralement mis en oeuvre à partir de solutions liquides, sont ainsi susceptibles d'être introduits dans le tank par des tubulures ou canalisations pouvant être stérilisées à la vapeur. Ces canalisations ou tubulures ne sont toutefois pas utilisées lorsque les ferments employés sont des ferments concentrés sous forme de poudre ou de grains. L'ensemencement en condition aseptique du lait contenu dans un tank à partir de tels ferments pose alors le problème de fournir un procédé et un dispositif permettant le transfert aseptique du contenu en poudre ou grains du conteneur ou récipient dans le tank.

Si l'on sait déjà relier et faire communiquer entre elles deux enceintes étanches qui doivent être ensuite désolidarisées l'une de l'autre, et cela sans que soit rompue l'étanchéité par rapport à l'atmosphère extérieure de chacune des enceintes ou de l'ensemble qu'elles forment, en particulier dans les installations de traitement et/ou de manipulation de corps dangereux, comme des corps radio-actifs, les moyens mis en oeuvre dans de telles installations, par exemple ceux décrits dans FR-A-1 346 486, sont relativement complexes, à la fois en ce qui concerne le dispositif de joint nécessaire, qu'en ce qui concerne la procédure d'utilisation qui exige un positionnement très précis des pièces constituant lesdits moyens pour mettre en prise simultanément deux couples de raccords de sorte que leur application apparaît mal-commode pour leur emploi éventuel dans le domaine de l'industrie alimentaire où des opérations d'ensemencement du lait contenu dans un tank doivent avoir lieu à intervalles rapprochés, de l'ordre de quelques heures. En outre, et alors qu'il est possible d'avoir accès à l'intérieur des enceintes de traitement et/ou de manipulation de corps dangereux, comme des corps radio-actifs, à l'aide de "boîte à gants", un tel accès n'est pas envisagé dans les cuves ou tanks de traitement de produits laitiers.

C'est, par conséquent, un but général de l'invention de fournir un procédé et un dispositif qui permettent d'assurer de façon simple et sûre le transfert aseptique du contenu d'un récipient dans un tank.

C'est, a cet égard, un but de l'invention de fournir un procédé et un dispositif propres à être mis en oeuvre aussi bien pour des récipients réutilisables que pour des récipients à jeter après transfert de leur contenu dans un tank ou analogue.

C'est, aussi, un but de l'invention de fournir un tel procédé et dispositif particulièrement bien adaptés au transfert de produits en poudre ou grains.

C'est, encore, un but de l'invention de fournir un tel procédé et dispositif dont la mise en oeuvre sur des installations existantes de fabrication de produits laitiers n'entraînent pas de coûts importants pour leur adaptation, d'une part, et autorisent l'exploitation de ces installations de manière usuelle, en particulier en ce qui concerne les opérations de nettoyage de la cuve ou tank et de ses accessoires, d'autre part.

C'est, enfin, un but de l'invention de fournir un tel procédé et dispositif dont la mise en ouvre puisse être automatisée pour ainsi faciliter autant que faire se peut l'exploitation de ces installations de fabrication de produits laitiers.

Un procédé selon l'invention, pour le transfert du contenu d'un récipient à ouverture fermée par un bouchon dans un tank comportant une ouverture de dimension conjuguée de celle du récipient et fermée par un obturateur amovible, procédé suivant lequel après avoir amené les deux ouvertures en regard l'une de l'autre on réunit par une jonction étanche les faces externes du bouchon et de l'obturateur puis on éloigne ensuite l'ensemble formé par le bouchon et l'obturateur des deux dites ouvertures est caractérisé en ce que l'on dissocie l'étape de réunion a jonction étanche du bouchon et de l'obturateur de celle de solidarisation du récipient sur le tank et en ce que l'on commande le déplacement de l'ensemble du bouchon et de l'obturateur par actionnement d'un organe solidaire dudit obturateur commandé de l'extérieur du tank.

Un tel procédé, en deux temps, permet alors de simplifier les éléments constitutifs du dispositif.

Dans une forme de réalisation de l'invention, la réunion à jonction étanche du bouchon et de l'obturateur est réalisée à l'aide de moyens de filetage conjugués qu'ils présentent et la solidarisation du récipient et du tank est également réalisée par des moyens de vissage prévus sur ledit récipient et sur un organe associé à un embout du tank.

Dans un autre mode d'exécution du procédé selon l'invention, l'accouplement du bouchon et de l'obturateur est réalisé par des moyens à encliquetage du type raccord a baïonnette, ou raccord GUILLEMIN ou par des moyens analogues par coopération d'organes conjugués ménagés sur le bouchon et l'obturateur, la solidarisation du récipient et du tank étant réalisée à l'aide de moyens du même type que ceux prévus pour le bouchon et l'obturateur et qui sont ménagés sur le récipient et le tank, respectivement.

Dans encore un autre mode d'exécution du procédé, les moyens d'accouplement du bouchon et de l'obturateur sont d'un type différent de ceux prévus pour la solidarisation du récipient et du tank, par exemple à vissage dans un cas et à encliquetage dans l'autre, ou vice versa.

Dans une forme de réalisation préférée de l'invention, la réunion mécanique du bouchon et de l'obturateur est réalisée à l'aide d'organes de formes conjuguées qu'ils présentent et la jonction étanche du bouchon et de l'obturateur est réalisée en faisant application d'une dépression appliquée entre le bouchon et l'obturateur par une source de vide mise en oeuvre au travers de l'organe solidaire de l'obturateur et prévu pour le déplacement d'ensemble de ce dernier et du bouchon.

Un dispositif pour le transfert du contenu d'un récipient muni d'une ouverture fermée par un bouchon dans un tank comportant une ouverture de dimensions conjuguée de celle du récipient et fermée par un obturateur amovible comprend alors de premiers moyens associés au bouchon et a l'obturateur, respectivement, pour leur réunion suivant une jonction étanche et de seconds moyens associés au récipient et au tank pour leur liaison amovible ainsi que des moyens associés audit obturateur et pouvant être commandés de l'extérieur du tank pour provoquer l'éloignement de l'obturateur desdites ouvertures afin de dégager celles-ci et autoriser le passage du contenu du récipient dans le tank.

Dans un premier mode d'exécution, lesdits premiers et seconds moyens sont des moyens de filetage.

Dans un second mode d'exécution, lesdits premiers et seconds moyens sont des moyens de raccord du type a baïonnette ou du type raccord GUILLEMIN ou des moyens analogues.

Dans un troisième mode d'exécution, lesdits premiers et seconds moyens comportent, d'une part, des moyens de filetage et d'autre part des moyens de raccord tels que définis ci-dessus.

Dans un mode d'exécution préféré, lesdits seconds moyens sont des moyens de filetage et lesdits premiers moyens comprennent, d'une part, des parties de formes conjuguées sur le bouchon et l'obturateur principalement destinées au positionnement relatif de l'un par rapport à l'autre et, d'autre part, des organes d'application d'une dépression entre le bouchon et l'obturateur après qu'ils aient été positionnés l'un par rapport à l'autre, à partir d'une source de vide agissant au travers de l'organe d'actionnement de l'obturateur.

Quel que soit le mode d'exécution, l'invention prévoit que les moyens de commande associés à l'obturateur comportent une tige mobile d'un poussoir ou d'un vérin, montée à translation dans une barrière aseptique.

L'invention à également pour objet un récipient pour la mise en oeuvre du procédé et/ou propre à entrer dans la constitution d'un dispositif tel que défini ci-dessus.

Le récipient qui peut être du type à emballage perdu ou, en variante, du type réutilisable, est alors caractérisé en ce qu'il comporte un col muni de moyens de liaison amovible au tank et un bouchon logé dans ledit col muni de moyens permettant sa réunion à jonction étanche à l'obturateur dudit tank, des moyens étant prévus sur le bouchon pour le maintien de celui-ci dans le récipient préalablement à sa liaison à l'obturateur et au cours de cette liaison.

Dans une forme de réalisation, la surface extérieure du col du récipient est filetée pour la solidarisation dudit récipient sur un embout du tank à l'aide d'une bague-écrou montée sur ledit embout et le bouchon monté à étanchéité dans ledit col comprend un lamage à filetage interne pour la réunion à jonction étanche à l'obturateur du tank, un têton de la surface latérale du bouchon s'opposant à la rotation dudit bouchon par rapport au col du récipient, tout en autorisant un déplacement relatif en translation pour déboucher ledit récipient lors de la commande de déplacement de l'obturateur du tank par rapport à l'ouverture de celui-ci.

Dans une forme de réalisation préférée, la surface extérieure du col du récipient est filetée pour la solidarisation dudit récipient sur l'embout du tank et le bouchon monté à étanchéité dans ledit col est quelque peu en forme de cuvette dont le fond présente un évidement avec lequel est propre à coopérer à emboîtage un têton de forme conjuguée de l'obturateur, avant que ne soit rendue opératoire la source de vide pour l'application de la dépression assurant la liaison à jonction étanche du bouchon et de l'obturateur.

D'autres caractéristiques et avantages de l'invention apparaîtront de la description qui suit, faite à titre d'exemple et en référence au dessin annexé dans lequel :

- la figure 1 est une vue schématique illustrant le procédé et le dispositif de l'invention ;

- la figure 2 est une vue schématique, à plus grande échelle, d'une partie du récipient contenant les produits à transférer ;

- la figure 3 est une vue partielle, schématique, illustrant l'obturateur du tank dans lequel sont à transférer les produits contenus dans le récipient ;

- la figure 4 est une vue partielle analogue à celle de la figure 1 mais à plus grande échelle ;

- la figure 5 illustre une autre condition des moyens constitutifs du dispositif selon l'invention ;

- la figure 6 est une vue schématique illustrant une deuxième forme de réalisation d'un dispositif selon l'invention :

- la figure 7 est une vue analogue à celle de la figure 6 mais pour une autre condition des moyens constitutifs du dispositif ;

- la figure 8 montre encore une autre condition des moyens illustrés sur les figures 6 et 7 :

- la figure 9 est encore une autre une vue desdits moyens :

- les figures 10, 11, 13 et 14 sont des vues analogues aux figures 6 à 9, mais pour une autre forme de réalisation; et

- la figure 12 est une vue à plus grande échelle d'une partie de la figure 11.

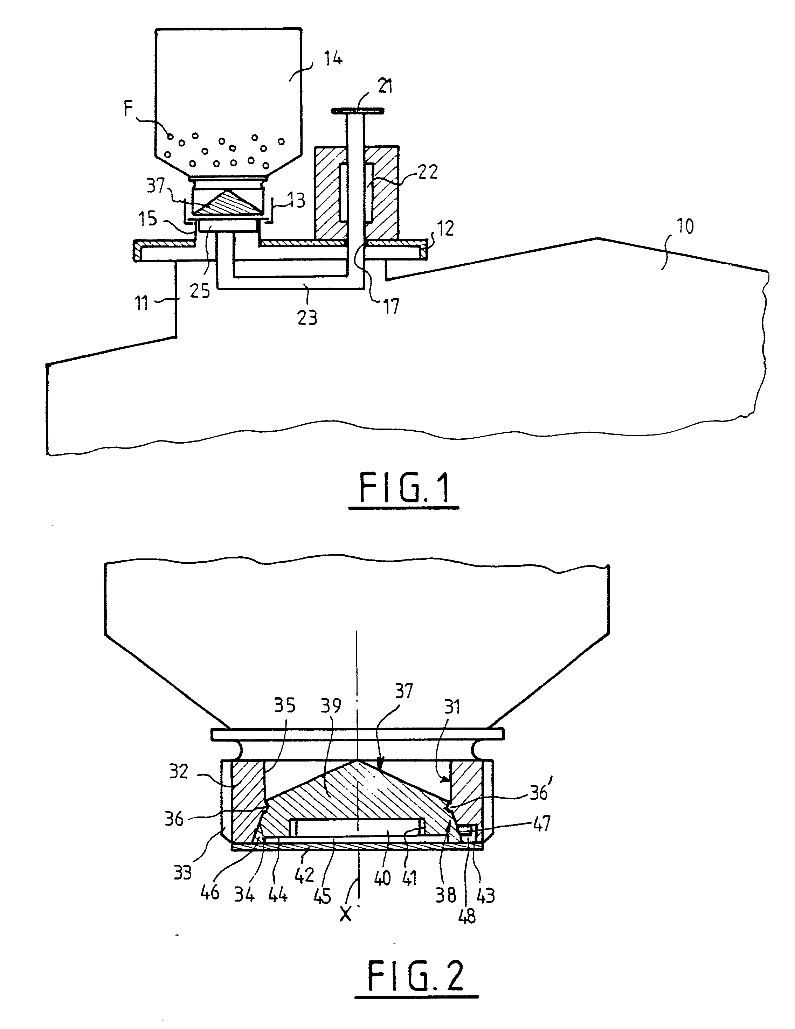

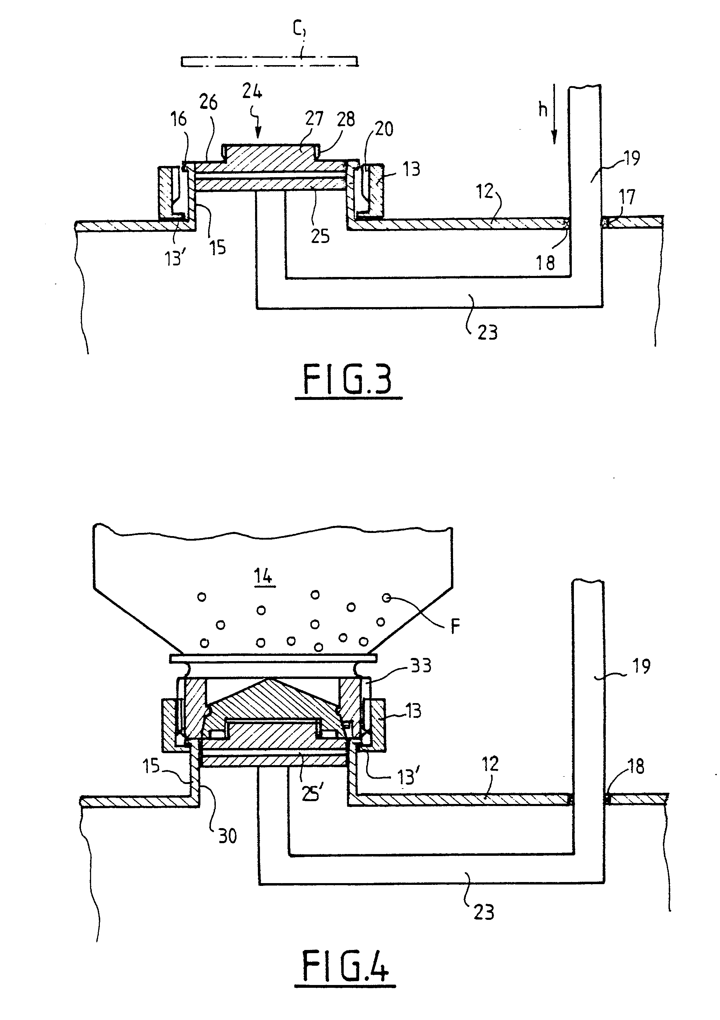

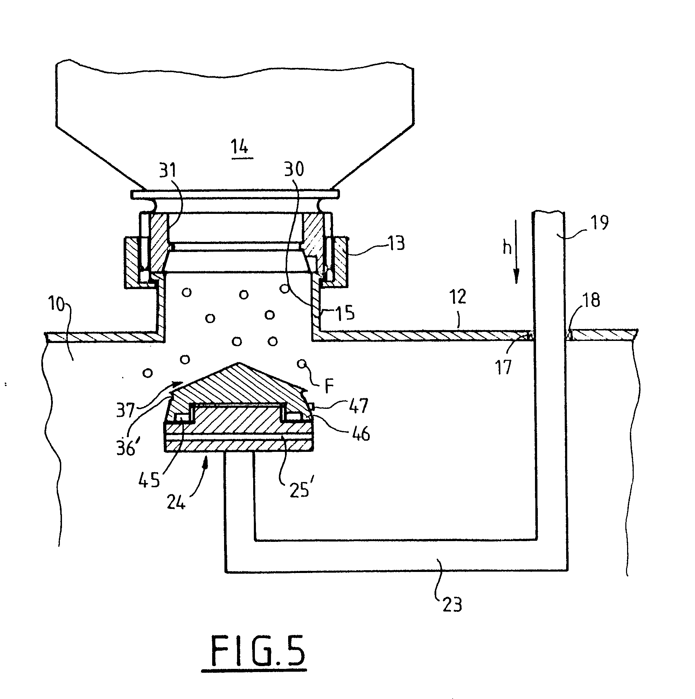

On se réfère d'abord aux figures 1 à 5 qui illustrent le procédé et une première forme de réalisation d'un dispositif selon l'invention comme appliqués à l'industrie alimentaire et, plus précisément, à une installation de fabrication de produits laitiers frais, comme des yaourts, sans que cette indication n'ait, cependant quelque caractère limitatif que ce soit. Dans une installation de ce type, une cuve ou tank 10 contenant du lait comporte, à l'extrémité d'une courte cheminée 11, une plaque opératoire 12 d'accès en son intérieur. La plaque 12 est de préférence prévue de construction sur le tank 10 ou, en variante, peut être associée à une structure existante, par exemple un trou d'homme de ladite cuve ou tank. Dans l'un et l'autre cas ladite plaque est munie d'un organe 13 pour la solidarisation amovible à la cuve 10 d'un récipient 14 contenant des produits à transférer dans le tank, par exemple dans le cas ici considéré des ferments concentrés sous forme de poudre ou de grains F. L'organe 13 est constitué par un écrou à filetage interne 20, figure 3, monté à coulissement sur un manchon 15 en saillie vers l'extérieur du tank et qui se termine par une collerette annulaire 16 d'appui d'un épaulement 13' de l'écrou 13 lorsque celui-ci vient en butée sur la collerette à la fin de l'actionnement dudit écrou qui sera explicité ci-après, figure 4, pour la solidarisation du récipient 14 sur le tank.

Comme également montré sur les figures 1 et 3-5, la plaque 12 est percée d'un passage 17 garni d'un joint 18 que traverse la tige 19 d'un organe d'actionnement comme un poussoir 21 monté dans une barrière aseptique 22 fixée sur la plaque 12. Dans la réalisation décrite et représentée, la tige 19 de l'organe d'actionnement 21 se poursuit après la traversée de la plaque 12 par une partie coudée 23 qui porte à son extrémité libre une tête 24 à plateau circulaire 25 monté à coulissement étanche dans le manchon 15 et dont la face externe 26 présente une platine en saillie 27 munie sur sa surface latérale de filets de vis 28, figure 3. Dans la condition montrée sur cette figure, le débouché du manchon 15, -c'est-à-dire l'ouverture de la cuve ou tank 10-, est fermé, alors qu'il est libéré lors d'un déplacement de l'organe d'actionnement 21 dans le sens de la flèche h d'une longueur suffisante pour faire échapper la tête 24 au manchon 15, ladite tête formant ainsi un obturateur amovible étanche de l'ouverture de la cuve ou tank 10. L'étanchéité requise est obtenue par un choix approprié du matériau constitutif de la tête 24 (métal ou matière plastique), des cotes et tolérances de montage ainsi que, le cas échéant, d'un joint monté dans une gorge 25' du plateau 25.

Les moyens qui viennent d'être décrits permettent d'amener en regard de l'ouverture 30 de la cuve l'ouverture 31 de dimensions conjuguées du récipient ou conteneur 14 ménagée dans le col 32 dudit récipient. Comme bien montré sur la figure 2, le col 32 est muni sur sa surface latérale externe d'un filetage 33 conjugué du filetage 20 de l'écrou 13, tandis que sa surface interne qui limite l'ouverture 31 est conformée à partir du débouché proprement dit de cette ouverture d'abord suivant une surface tronconique 34 puis une surface cylindrique 35, séparée de la première par un jonc en saillie 36 avec lequel coopère la gorge 36' d'un bouchon 37. Celui-ci comporte une première partie tronconique 38 destinée à être logée dans la partie 34 du col du bouchon et une seconde partie tronconique 39 de même axe X que la première, mais d'angle au sommet plus grand que celui de la partie 38. Selon l'invention, également, le bouchon 37 présente sur sa face 44 tournée vers l'extérieur un premier lamage 45 définissant une bague périphérique externe 46 de la partie 38 et un second lamage 40, lui aussi d'axe X, et dont la surface latérale porte un filetage 41 conjugué des filets 28 de l'obturateur 24. Un têton 47 en saillie sur la surface latérale du bouchon 37 est logé dans une rainure longitudinale 48 du col 32 pour empêcher une rotation relative du bouchon par rapport au col et un opercule 42 est scellé, le cas échéant, sur la face annulaire 43 d'extrémité du col 32 aussi longtemps que le conteneur ou récipient 14 n'est pas utilisé.

Lorsqu'il doit l'être, par contre, l'opercule 42 est retiré et le récipient ou conteneur 14 est mis en place sur le tank 10, comme montré sur les figures 1, 4 et 5. Pour ce faire, l'obturateur 24 étant au début de l'opération dans la position montrée sur la figure 3, on visse d'abord le bouchon 37 sur l'obturateur 24 par coopération des filets de vis 28 et 41 jusqu'à contact de la bague 46 sur la surface 26 puis on visse l'écrou 13 sur le col 32 par le filetage 33 jusqu'à ce que l'écrou occupe la position montrée sur la figure 4 en laquelle son épaulement 13'
est en butée contre la collerette 16 du manchon 15
sur lequel repose alors le conteneur par la face
annulaire de son col 32.

Lorsqu'à partir de cette condition l'organe d'actionnement 21 est enfoncé suivant la direction de la
flèche h, figure 5, l'obturateur 24 entraîne avec lui
le bouchon 37, libérant les produits en grains ou en
poudre F contenus dans le conteneur ou récipient
14 à l'intérieur de la cuve ou tank 10. La forme
tronconique du bouchon favorise le bon écoulement desdits produits qui peuvent également, le
cas échéant, être sous une autre forme que de la
poudre ou des grains. Compte tenu de la liaison
étanche de l'obturateur 24 et du bouchon 37, les
surfaces non stériles du bouchon et de l'obturateur
sont enfermées d'une manière hermétique et le
transfert du contenu F du récipient dans le tank,
par exemple pour l'ensemencement du lait enfermé dans ce dernier, peut ainsi avoir lieu de manière aseptique, seules des surfaces stériles de l'obturateur et du bouchon venant en contact de l'environnement à protéger.

Après vidange du contenu du récipient 14,
l'organe 21 est actionné de manière inverse à celle
décrite précédemment ce qui ramène l'obturateur
dans sa condition initiale de fermeture de l'ouverture 30. Le récipient ou conteneur 14 est alors désolidarisé de la cuve 10 par dévissage de l'écrou 13,
de même que le bouchon 37 de l'obturateur 24 et
un couvercle C, figure 3, est mis en place sur le
manchon 15. Après soutirage du contenu de la
cuve celle-ci est nettoyée et stérilisée, en particulier dans la zone de l'ouverture 30 et de la
surface latérale de l'obturateur, et le dispositif est
prêt pour une nouvelle opération de transfert ultérieur du contenu d'un nouveau récipient ou conteneur 14 dans la cuve.

Le récipient peut être un récipient à jeter et est
alors avantageusement réalisé en matière plastique
ou est du type réutilisable, et est alors principalement en métal (acier inoxydable) le bouchon ou
certaines de ses parties pouvant cependant être en
matière plastique.

Quelle que soit la réalisation, le transfert du
contenu du récipient est effectué de manière fiable
sans risque de chute de corps étrangers et sans
risque pour l'opérateur ; complémentairement, le
processus peut être mécanisé et automatisé, ce
qui rend son emploi particulièrement intéressant
pour des opérations répétitives à intervalles de
temps rapprochés.

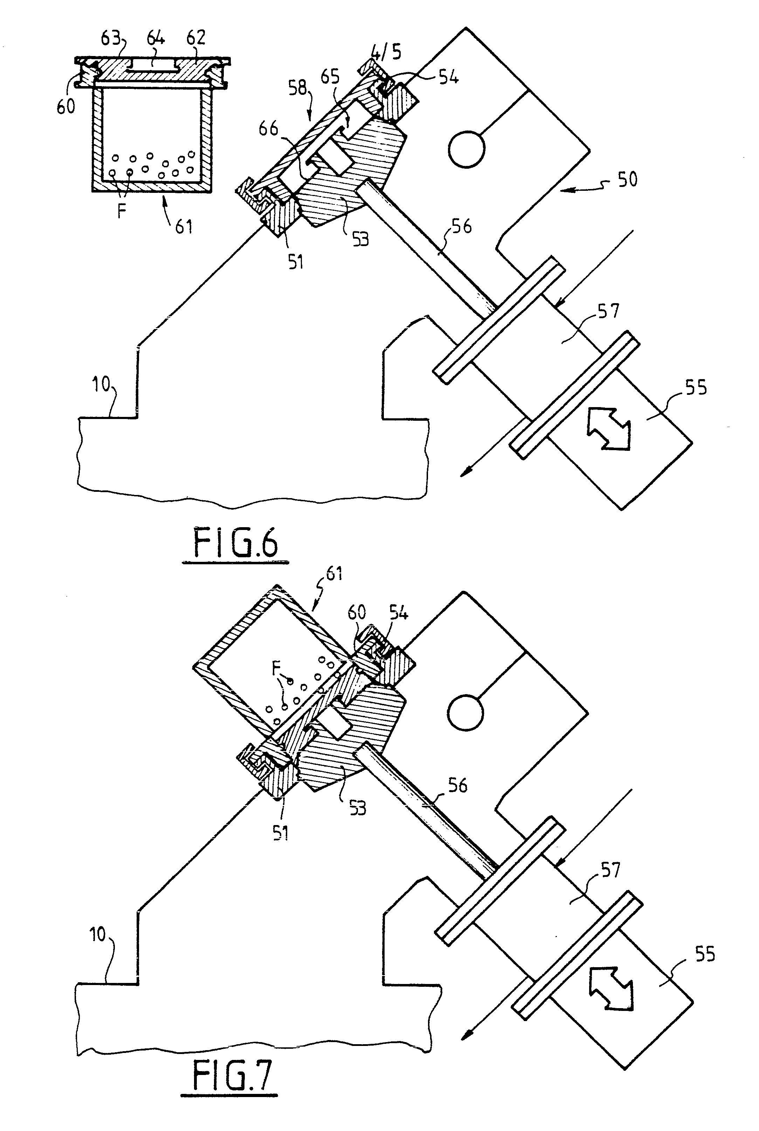

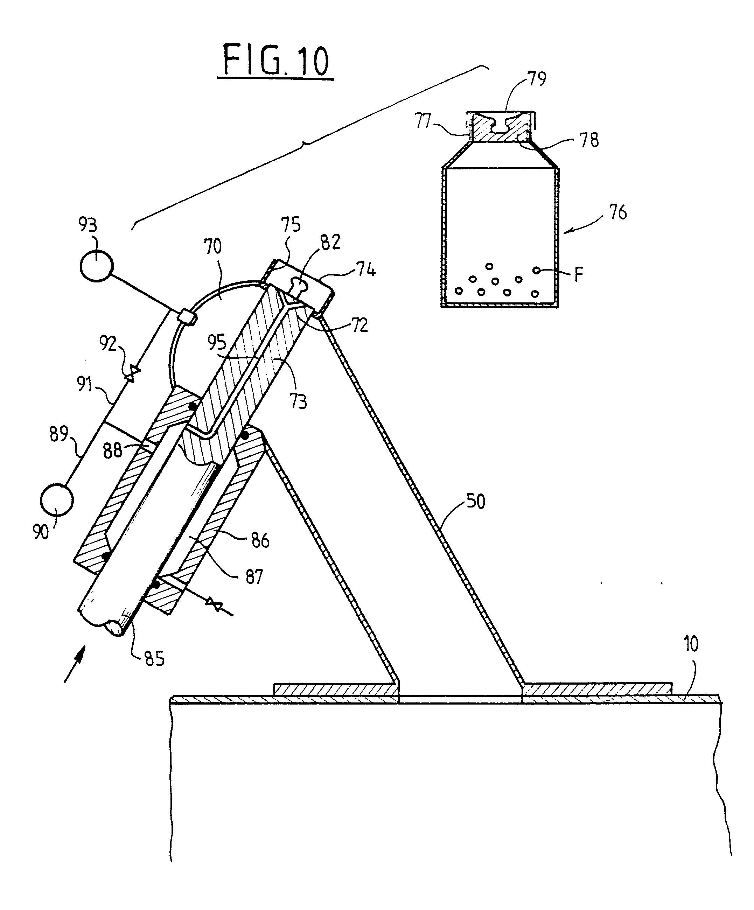

On se réfère maintenant aux figures 6 à 9
illustrant une autre forme de réalisation du dispositif selon l'invention. Dans celle-ci, la cuve ou tank
10 est muni d'une cheminée 50 sur laquelle est
fixée une bride 51 limitant une ouverture 52 propre
à être obturée à l'intérieur de la cheminée, par un obturateur 53 et, à l'extérieur de la cheminée, par
un couvercle amovible 58, figures 6 et 9, qui peut
être assujetti à la bride 51 par des moyens 54 de
raccord, par exemple du type à baïonnette, tandis
que l'obturateur 53 est, quant à lui, propre à être
appliqué à étanchéité sur l'ouverture 52 par un
vérin 55 à tige 56 montée à coulissement au
travers d'une barrière aseptique 57 interposée entre le vérin 55 et la cheminée 50.

Les moyens de raccord 54 qui peuvent aussi
être du type raccord "GUILLEMIN" ou analogue
sont également prévus pour la fixation sur la bride
51 d'un anneau 60 qui entoure l'ouverture de débouché d'un conteneur ou récipient 61 dont le
contenu F est à transférer dans la cuve ou tank 10
et qui est fermé par un bouchon 62, figure 6.
Comme bien visible sur cette figure, de même que
sur la figure 7, le bouchon 62 est monté à étanchéité dans l'anneau 60 et est conformé sur sa
face 63 extérieure au conteneur ou récipient suivant un lamage 64 dans lequel sont ménagés des
organes de fixation du type à baïonnette, ou du
type raccord rapide, conjugués de ceux que porte
une saillie 65 de la face externe 60 de l'obturateur
63.

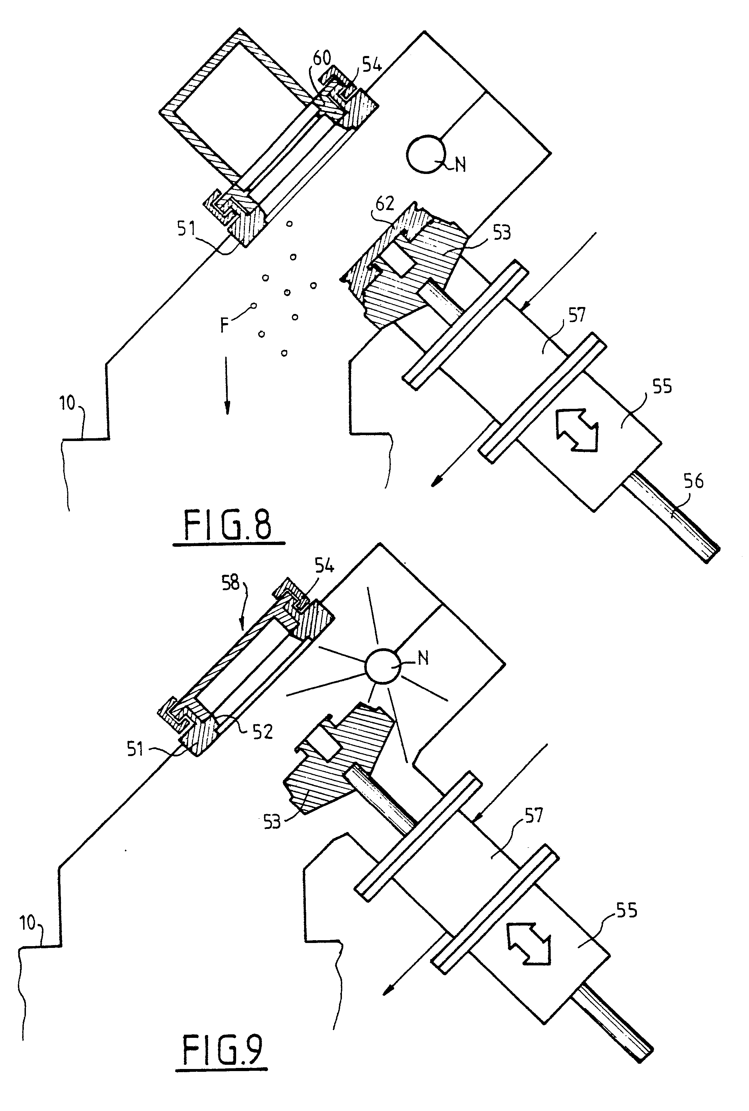

Le procédé de mise en oeuvre du dispositif
découle immédiatement de ce qui précède. Dans
la condition initiale l'ouverture 52 de la cheminée
50 est fermée à la fois par le couvercle 58 et par
l'obturateur 53. Pour le transfert des produits F du
récipient 61 dans le tank 10 on retire tout d'abord
le couvercle 58 et on accouple l'obturateur 53 au
bouchon 62 par coopération des organes conjugués de la saillie 65 et du lamage 64, figure 7. On
solidarise ensuite le récipient 61 et la bride 51 à
l'aide des moyens 54 et de l'anneau 60. Lorsque, à
partir de la condition montrée sur la figure 7, on
actionne le vérin 55, la tige 56 de ce dernier
entraîne l'ensemble de l'obturateur 53 et du bouchon 62 réunis à jonction étanche à l'intérieur de la
cheminée 50, dégageant ainsi les ouvertures alors
en regard de ladite cheminée et du récipient 61
dont le contenu F est transféré dans la cuve ou
tank 10, figure 8. Compte tenu de la liaison étanche de l'obturateur 53 et du bouchon 62, les surfaces non stériles du bouchon et de l'obturateur sont
enfermées d'une manière hermétique et le transfert
du contenu du récipient dans le tank, par exemple
pour l'ensemencement du lait enfermé dans ce
dernier, peut ainsi avoir lieu de manière aseptique.

Après vidange du contenu du récipient 61, le
vérin 55 est actionné de manière inverse à celle
décrite précédemment et après que ledit récipient
à nouveau garni de son bouchon ait été retiré, le
couvercle 58 peut être remis en place sur la bride
51 pour une nouvelle opération de transfert.

Lorsque cette opération correspond, -comme
indiqué ci-dessus-, à un nouvel ensemencement de lait dont à été rempli la cuve ou le tank 10 après qu'aient été soutirés les produits fermentés, ce transfert est précédé d'une opération de nettoyage, le plus simplement à l'aide d'une boule N, en soi connue, qui est de préférence rendue opératoire lorsque l'obturateur 53 est dans la condition montrée sur la figure 9, c'est-à-dire à mi-chemin entre sa position de fermeture de l'ouverture 52 de la cheminée et sa position totalement rétractée montrée sur la figure 8.

L'invention n'est pas, bien entendu, limitée aux formes de réalisation décrites et représentées. Ainsi, les moyens de jonction étanche du couvercle et de l'obturateur peuvent être du type à visser et ceux de solidarisation du récipient au tank du type à raccord ou à encliquetage : en variante, l'obturateur et le bouchon sont munis pour leur liaison de moyens du type à baïonnette ou analogue tandis que le col du récipient et la cheminée du tank sont équipés de moyens de filetage pour leur solidarisation amovible.

Dans encore une autre forme de réalisation préférée, figures 10 à 14, la cheminée 50 associée à la cuve ou au tank 10 présente à son extrémité opposée à celle de raccord au tank une chambre 70 présentant une ouverture 71 propre à être obturée à l'intérieur de la chambre 70 par un obturateur 72 formant l'extrémité d'une tige 73. à l'extérieur de la chambre 70, l'ouverture 71 peut être fermée par un couvercle amovible 74, propre à être vissé sur un court canon fileté 75 adjacent à l'ouverture 71.

Le conteneur ou récipient 76, dont le contenu F est à transférer dans la cuve ou tank 10, peut être du type "jetable" ou du type réutilisable et est alors principalement en métal, comme de l'acier inoxydable. Dans l'un et l'autre cas, son col 77 est fileté pour pouvoir coopérer avec le canon 75 de la chambre 70 et, après qu'il ait été rempli de son contenu F, il est fermé par un bouchon 78 monté à étanchéité dans le col 77 avec interposition, le cas échéant, d'un moyen d'étanchéité comme un joint O-ring (non représenté). Un couvercle ou opercule 79 est également rapporté sur le bouchon 78 aussi longtemps que le conteneur ou récipient 76 ne doit pas être utilisé.

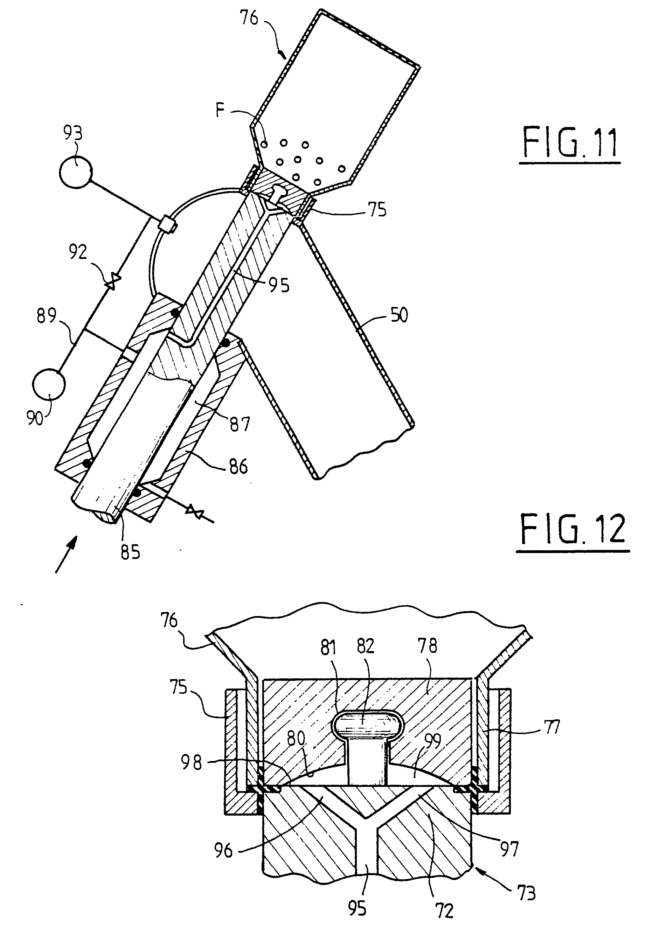

Comme bien visible sur la figure 12, le bouchon 78 est quelque peu en forme de cuvette, avec une surface externe 80 à concavité tournée vers l'intérieur et, dans son fond, une ouverture 81 propre à recevoir à emboîtage élastique un têton 82 de forme conjuguée prévu à l'extrémité d'obturation 72 de la tige 73.

Cette dernière est solidaire d'un vérin 85, dont la cage 86 est reliée par l'intermédiaire d'une barrière aseptique, non représentée, à la cheminée 50 et à la chambre 70 et qui délimite avec la partie mobile du vérin 85, une chambre 87. à cette dernière est reliée au travers d'un alésage 88 et par une tubulure 89, une source de vide 90, tandis que, par une tubulure 91 sur laquelle est interposée une vanne 92, l'alésage 88 peut également être relié à une source de liquide de nettoyage, montrée schématiquement en 93, et qui est aussi reliée à un injecteur 94 débouchant dans la chambre 70.

Comme bien montré sur les figures, et en particulier la figure 12, la tige 73 est percée axialement d'un forage 95 se terminant dans la partie de tête 72 par deux conduits 96 et 97 débouchant sur la face d'extrémité 98 de la tige pour mettre en communication, comme il sera explicité ci-après, la source de vide 90 et l'espace 99 régnant entre la face 98 de la tige 73 et la face en regard 80 du bouchon 78.

De façon plus précise, lorsqu'on souhaite transférer le contenu F du récipient 76 dans le tank 10, on retire tout d'abord les couvercles 74 et 79 et on rapporte le récipient 76 sur la cheminée 50 en vissant son col 77 dans le canon 75. Au cours de cette opération, le têton 82 pénètre dans l'ouverture 81 du bouchon 78, reliant ainsi ledit bouchon à l'obturateur 72 que forme l'extrémité de la tige 73, mais de manière "lâche" et, en tout état de cause, sans jonction étanche entre le bouchon et l'obturateur. Pour réaliser une telle jonction, on rend alors opératoire la source de vide 90 et le dispositif étant dans la condition montrée sur la figure 11, une dépression est appliquée au travers du forage 95 et des conduits 96 et 97 à l'espace 99 : le bouchon 78 est alors très fermement solidarisé à étanchéité avec la partie d'extrémité 72 formant obturateur de la tige 73.

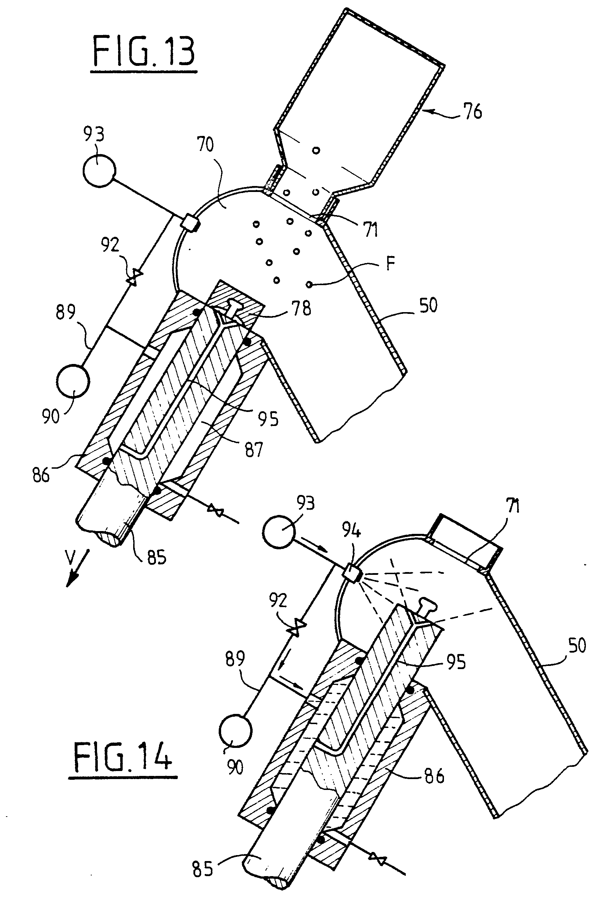

Le vide étant maintenu, l'actionnement du vérin 85, pour faire déplacer la partie mobile de celui-ci dans la direction de la flèche V, figure 13, entraîne l'ensemble obturateur-bouchon, réuni à jonction étanche à l'intérieur de la chambre 70, dégageant ainsi les ouvertures en regard de cette chambre et du conteneur 76 pour livrer passage au contenu F dans la cheminée 50 et de là, dans le tank 10. Compte-tenu de la liaison étanche de l'obturateur 72 et du bouchon 78, en raison de la dépression qui les maintient accolés, les surfaces non stériles du bouchon et de l'obturateur sont enfermées d'une manière hermétique et le transfert du contenu du récipient dans le tank, par exemple pour l'ensemencement du lait enfermé dans ce dernier, peut ainsi avoir lieu de manière aseptique.

Après vidange du contenu du récipient 61, le vérin 85 est actionné de manière inverse à celle décrite précédemment et après que ledit récipient, à nouveau garni de son bouchon, ait été retiré, le couvercle 74 peut être remis en place sur le canon 75 en attente d'une nouvelle opération de transfert.

Lorsque cette opération correspond, -comme indiqué ci-dessus-, à un nouvel ensemencement de lait dont à été rempli la cuve ou le tank 10 après qu'aient été soutirés les produits fermentés, ce transfert est précédé d'une opération de nettoyage. Celle-ci est conduite, le plus simplement, en rendant opératoire l'injecteur 94 relié à la source de produit de nettoyage 93, comme montré sur la figure 14 d'une part, mais également en reliant par la vanne 92 cette même source de produit de nettoyage à la chambre 87 intérieure à la cage de vérin 86 d'où le liquide ou produit de nettoyage traverse également l'alésage 95 et les conduits 96 et 97 de l'obturateur 72, lequel est alors avantageusement à mi-chemin entre sa position de fermeture et d'ouverture du canon 75.

## Revendications

1. Procédé pour le transfert du contenu d'un récipient à ouverture fermée par un bouchon dans un tank comportant une ouverture de dimension conjuguée de celle du récipient et fermée par un obturateur amovible, suivant lequel après avoir amené les deux ouvertures en regard l'une de l'autre on réunit par une jonction étanche les faces externes du bouchon et de l'obturateur, puis on écarte l'ensemble formé par le bouchon et l'obturateur des deux dites ouvertures, caractérisé en ce que l'on dissocie l'étape de réunion à jonction étanche du bouchon (37, 62) et de l'obturateur (24, 53) de celle de solidarisation du récipient sur le tank et en ce que l'on commande le déplacement de l'ensemble du bouchon et de l'obturateur par actionnement d'un organe solidaire dudit obturateur (24, 53) commandé de l'extérieur du tank.

2. Procédé selon la revendication 1, caractérisé en ce que la réunion en un ensemble unitaire à jonction étanche du bouchon (37) et de l'obturateur (24) puis la solidarisation du récipient (14) et du tank (10) sont réalisées par vissage, le bouchon et l'obturateur, de même que le récipient et un embout du tank présentant des moyens de filetage conjugués.

3. Procédé selon la revendication 1, caractérisé en ce que l'accouplement du bouchon (62) et de l'obturateur (53) est réalisé par des moyens à raccord ou encliquetage du type raccord à baïonnette, ou raccord GUILLEMIN ou par des moyens analogues par coopération d'organes conjugués ménagés sur le bouchon et l'obturateur, la solidarisation du récipient (61) et du tank (10) étant réalisée à l'aide de moyens du même type que ceux prévus pour le bouchon et l'obturateur et qui sont ménagés sur le récipient et le tank, respectivement.

4. Procédé selon la revendication 1, caractérisé en ce que les moyens d'accouplement du bouchon et de l'obturateur sont d'un type différent de ceux prévus pour la solidarisation du récipient et du tank, par exemple à vissage dans un cas et à raccord ou encliquetage dans l'autre, ou vice versa.

5. Procédé selon la revendication 1, caractérisé en ce que les moyens d'accouplement du bouchon et de l'obturateur comportent des organes de formes conjuguées (81, 82) pour leur liaison mécanique et leur positionnement réciproque, et en ce que la jonction étanche du bouchon (78) et de l'obturateur (72) est réalisé en faisant application d'une dépression appliquée entre le bouchon et l'obturateur par une source de vide (90) mise en oeuvre au travers de l'organe (73) solidaire de l'obturateur (72) et prévu pour le déplacement d'ensemble de l'obturateur et du bouchon.

6. Dispositif pour le transfert du contenu d'un récipient muni d'une ouverture fermée par un bouchon dans un tank comportant une ouverture de dimension conjuguée de celle du récipient fermée par un obturateur amovible, caractérisé en ce qu'il comprend de premiers moyens (28, 41 ; 64, 65) associés au bouchon (37 ; 62 ; 78) et à l'obturateur (24, 53, 72) pour leur réunion suivant une jonction étanche et de seconds moyens (20, 33 ; 54, 62) associés au récipient (14 ; 61 ; 76) et au tank (10) pour leur liaison amovible ainsi que des moyens (19, 21, 23 ; 55, 56) associés audit obturateur (2, 53, 72) et pouvant être commandés de l'extérieur du tank pour provoquer l'éloignement de l'obturateur desdites ouvertures afin de dégager celles-ci et autoriser le passage du contenu (F) du récipient (14, 61, 76) dans le tank (10).

7. Dispositif selon la revendication 6, caractérisé en ce que lesdits premiers et seconds moyens sont des moyens de filetage (20, 33 ; 27, 41).

8. Dispositif selon la revendication 6, caractérisé en ce que lesdits premiers et seconds moyens sont des moyens de raccord ou d'encliquetage du type raccord à baïonnette, raccord GUILLEMIN ou analogue (54, 60 ; 64, 65).

9. Dispositif selon la revendication 6, caractérisé en ce que lesdits moyens de commande associés à l'obturateur comportent la tige mobile (19, 56) montée à translation dans une barrière aseptique (22, 57) d'un poussoir (21) ou d'un vérin (55).

10. Dispositif selon la revendication 6, caractérisé en ce que lesdits seconds moyens sont des moyens de filetage et lesdits premiers moyens comportent, d'une part, des parties (81, 82) de formes conjuguées sur le bouchon (78) et l'obturateur (72), principalement destinées au positionnement respectif de l'un par rapport à l'autre et, d'autre part, des organes (95, 96, 97,...) d'application d'une dépression entre le bouchon et l'obturateur, après qu'ils aient été positionnés l'un par rapport à l'autre, à partir d'une source de vide (90) agissant au travers de l'organe (73) d'actionnement de l'obturateur (72).

11. Récipient propre à entrer dans la constitution d'un dispositif selon les revendications 6 et 7, caractérisé en ce qu'il comporte un col (32) fileté propre à être obturé par un bouchon (37) muni sur sa face externe (44) d'un lamage (40) à filetage interne (41) et de moyens (36', 47) pour le maintien du bouchon dans le récipient préalablement à sa liaison à l'obturateur, ainsi que, le cas échéant, un opercule (42) scellé sur ledit col pour assurer l'étanchéité du récipient aussi longtemps que celui-ci n'est pas solidarisé au tank (10).

12. Récipient propre à entrer dans la constitution d'un dispositif selon les revendications 6 et 8, caractérisé en ce qu'il comprend au voisinage de son débouché un anneau (60) propre à coopérer avec des moyens de raccord (54) du tank (10) et un bouchon (62) monté à étanchéité dans ledit anneau et muni sur sa face externe (63) de moyens (64) propre à coopérer avec des moyens conjugués d'une saillie (65) de l'obturateur (53) de l'ouverture (52) du tank (10).

13. Récipient propre à entrer dans la constitution d'un dispositif selon les revendications 6 et 10, caractérisé en ce que la surface extérieure de son col (77) est filetée pour sa solidarisation sur l'embout (75) du tank (10) et en ce que le bouchon (78) monté à étanchéité dans ledit col (77) est quelque peu en forme de cuvette dont le fond présente un évidement (81) avec lequel est propre à coopérer à emboîtage élastique un têton (82) de forme conjuguée de l'obturateur (72) avant que ne soit rendue opératoire la source de vide (90) assurant la liaison à jonction étanche du bouchon (78) et dudit obturateur (72).

$\underline{\textsf{FIG.1}}$

$\underline{\textsf{FIG.2}}$

**FIG.3**

**FIG.4**

## FIG.5

EP 0 368 708 A1

FIG.6

FIG.7

FIG.8

FIG.9

# FIG.10

FIG. 11

FIG. 12

EP 0 368 708 A1

FIG.13

FIG.14

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | DE-U-8 708 058 (SCHRÖDER)<br>* Figure 1; revendication 1 *<br>--- | 1,6,11-13 | B 67 D 5/02<br>B 67 D 1/08<br>F 16 L 29/00 |
| A | FR-A-1 557 750 (PONS ET COMPAGNIE)<br>* Figures 1-3; page 4, colonne 1, ligne 8 - colonne 2, ligne 5 *<br>--- | 1 | |
| A | DE-A-3 526 110 (GOEBELL)<br>----- | | |

|  |  |
|---|---|
| | DOMAINES TECHNIQUES RECHERCHES (Int. Cl.5) |
| | B 67 D<br>B 65 D<br>F 16 L<br>G 21 F |

Le présent rapport a été établi pour toutes les revendications

| Lieu de la recherche | Date d'achèvement de la recherche | Examinateur |
|---|---|---|
| LA HAYE | 08-01-1990 | DEUTSCH J.P.M. |

EPO FORM 1503 03.82 (P0402)